# FASCICULE DE BREVET EUROPEEN

(11) **EP 2 704 973 B1**
(45) Date de publication et mention de la délivrance du brevet: **23.09.2015**
(21) Numéro de dépôt: 12725476.1
(22) Date de dépôt: 27.04.2012
(51) Int. Cl.: B65H 29/50, B65H 31/30

(54) **DISPOSITIF D'EMPILAGE DE FEUILLES DE PAPIER OU SIMILAIRE**
VORRICHTUNG ZUM STAPELN VON PAPIERBÖGEN ODER DERGLEICHEN
DEVICE FOR STACKING SHEETS OF PAPER OR SIMILAR

(30) Priorité: 02.05.2011 FR 1153734
(43) Date de publication de la demande: 12.03.2014
(73) Titulaire: Kern AG, 3510 Konolfingen (CH)
(72) Inventeur: JIWAN, Christian, F-68230 Turckheim (FR); LEISSIER, Pascal, F-68140 Lutterbach (FR); EITEL, Frédéric, F-68250 Westhalten (FR)
(74) Mandataire: Koelbel, Caroline
(86) Numéro de dépôt international: PCT/FR2012/000168
(87) Numéro de publication internationale: WO 2012/150386

(56) Documents cités:
- WO-A1-99/00305
- FR-A- 1 402 034
- FR-A1- 2 480 726
- JP-A- 8 217 308
- JP-A- 9 086 768
- JP-A- 48 027 453
- JP-A- 56 141 260
- US-A- 2 660 432
- US-A- 3 419 266

## Description

### Domaine technique :

La présente invention concerne un dispositif d'empilage de feuilles de papier ou similaire, agencé pour former des piles en aval d'une ligne de découpe de feuilles comportant notamment un dérouleur, une imprimante et une découpeuse, ledit dispositif d'empilage comportant un convoyeur de sortie de coupe agencé pour amener une à une les feuilles coupées par la découpeuse vers une table d'empilement agencée pour communiquer avec un convoyeur d'évacuation des piles situé en contrebas du convoyeur de sortie de coupe, de sorte qu'une fois formée, au moins une pile complète de feuilles puisse être transférée de ladite table d'empilement vers ledit convoyeur d'évacuation des piles, ladite table d'empilement étant fixe et située dans le même plan que ledit convoyeur d'évacuation des piles et ledit dispositif d'empilage comportant un convoyeur de décharge comportant une première extrémité et une seconde extrémité communiquant respectivement avec ledit convoyeur de sortie de coupe et ladite table d'empilement, ledit convoyeur de décharge étant agencé pour transférer une à une lesdites feuilles coupées dudit convoyeur de sortie de coupe vers ladite table d'empilement et étant couplé à des moyens d'entraînement agencés pour déplacer ladite seconde extrémité entre une position basse dans laquelle, lorsque la première feuille d'une pile est acheminée, ladite seconde extrémité se situe au niveau de la table d'empilement et une position haute dans laquelle, lorsque la dernière feuille de la pile est acheminée, ladite seconde extrémité se situe à une hauteur correspondant à celle de la pile complète.

### Technique antérieur :

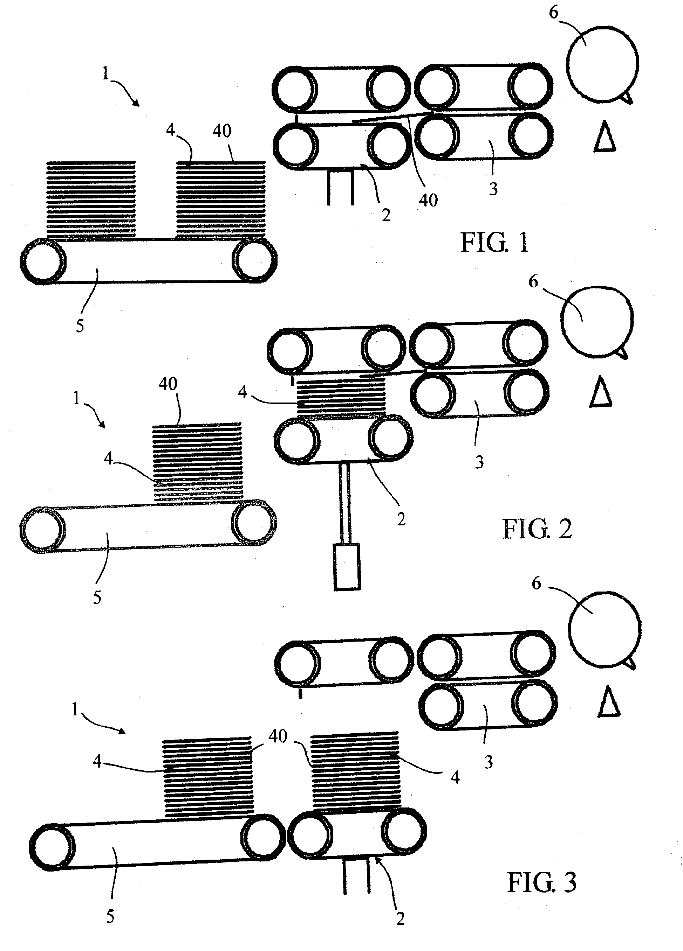

L'art antérieur, dans le domaine technique considéré à savoir le traitement de feuilles de papier à grande vitesse, est représenté par un dispositif d'empilage 1 illustré aux figures 1 à 3. Un tel dispositif d'empilage 1 comporte de manière classique une table d'empilement 2 mobile en translation verticale entre au moins une position dans laquelle elle est vide et située sensiblement dans le même plan que le convoyeur de sortie de coupe 3 (fig. 1) et au moins une autre position dans laquelle elle est chargée d'une pile de feuilles 4 et située dans le même plan que le convoyeur d'évacuation 5 des piles de feuilles 4. Par conséquent, lorsqu'une pile de feuilles 4 est en formation (fig. 2), les feuilles sont progressivement accumulées les unes sur les autres sur la table d'empilement 2 dont le niveau descend au fur et à mesure de l'accumulation des feuilles et de la formation de la pile 4 jusqu'à atteindre le plan du convoyeur d'évacuation 5 vers lequel elles sont alors transférées (fig. 3).

Une telle configuration implique par conséquent que la table d'empilement 2, qui doit supporter, au moins temporairement, tout le poids de la pile de feuilles 4, présente une structure d'autant plus lourde et rigide que les piles de feuilles 4 sont hautes. Le déplacement vertical d'une telle table d'empilement 2 suppose par conséquent des organes d'actionnement puissants et rapides qui sont non seulement onéreux mais nécessitent également une maintenance régulière.

Par ailleurs, une fois la pile complète de feuilles formée, la table d'empilement 2 doit effectuer non seulement un mouvement de descente verticale pour rejoindre le plan du convoyeur d'évacuation mais également un mouvement de remontée pour rejoindre à nouveau celui du convoyeur de sortie de coupe 3 et redémarrer un nouveau cycle d'empilement de feuilles. Durant ce laps de temps, qui varie en fonction de la hauteur finale de la pile de feuilles 4, la découpeuse 6 est donc impérativement arrêtée, entraînant un ralentissement notable des cadences de production d'un tel dispositif d'empilement 1, peu compatible avec les cadences des imprimantes à grande vitesse mises en oeuvre actuellement dans la plupart des unités de traitement de documents visés par l'invention.

La publication FR 2 480 726 décrit un dispositif d'empilage de flans en carton dans lequel la table d'empilement est fixe et le convoyeur de décharge est mobile et comporte une première extrémité en amont, qui sert d'articulation pour le convoyeur, et une seconde extrémité en aval, qui communique avec la table d'empilement fixe et s'élève au fur et à mesure de l'empilage des flans de carton, imposant une variation de la longueur du convoyeur de décharge. Pour permettre cette variation de longueur, le convoyeur de décharge est équipé d'un dispositif de mise en tension dont le but de compenser les écarts de longueur entre les extrémités dudit convoyeur. Par ailleurs, la pile se forme librement, la table d'empilement n'étant pas équipée de dispositif de guidage et de positionnement des flancs de carton. De fait, cette technologie est limitée à des vitesses lentes et à l'empilement d'un matériau tel que du carton, par définition rigide et plus lourd que le papier. Elle n'est pas transposable au traitement des feuilles de papier qui sont par définition fines, souples et légères, ni à un traitement à grande voire très grande vitesse, car elle ne comporte aucun dispositif permettant de maîtriser la trajectoire individuelle des feuilles, ni d'obtenir des piles de feuilles correctement formées présentant des bords parfaitement alignés. Ce même type de technologique est également décrit dans les publications FR 1 402 034, JP 8 217308, JP 48 027453, US 3,419,266 et US 2,660,432. Mais, aucune solution existante ne répond au problème posé.

Par ailleurs, si le format des feuilles de papier à traiter est trop grand et ne permet pas leur empilage en piles, les feuilles de papier doivent être empilées en épi ou en écaille de poisson, ce qui signifie qu'elles sont déposées l'une sur l'autre en se chevauchant partiellement sur une table d'empilement pourvue d'un convoyeur animé d'une vitesse d'avance lente. Il est donc économiquement intéressant de pouvoir modifier une machine d'empilage de feuilles pour passer d'un mode « empilage en pile » à un mode « empilage en épi ». Néanmoins, dans le dispositif d'empilage de l'art antérieur représenté aux figures 1 à 3, cette modification nécessite soit de déposer la table d'empilement pour la remplacer par un convoyeur d'empilement positionné en sortie de découpeuse, soit de prévoir un système « by-pass » pour court-circuiter la table d'empilement, et de déplacer le convoyeur de sortie à la hauteur de la découpeuse. Le passage en mode « empilage en épi » nécessite par conséquent l'addition d'éléments mécaniques et de machines complémentaires comprenant des moteurs, des courroies, des cellules de détection, etc. ce qui constitue des ensembles coûteux et nécessite un temps d'intervention non négligeable.

Dans les dispositifs d'empilage de flancs de carton décrits ci-dessus, cette transformation en mode « empilage en épi » n'est pas possible car aucun des dispositifs décrits ne comporte de moyens de guidage maintenant les feuilles à la hauteur de la table d'empilement.

### Exposé de l'invention :

La présente invention a pour objet de résoudre ces problèmes en proposant un dispositif d'empilage de feuilles de papier ou similaire comportant une structure légère et simplifiée, dont le coût et la fréquence des opérations de maintenance sont fortement limités. Un autre but de l'invention est de proposer un dispositif d'empilage de feuilles dans lequel la table d'empilement peut être alimentée presque en permanence, de sorte que les temps d'arrêt de la découpeuse sont considérablement réduits et la productivité de l'imprimante est préservée. Un autre but encore de l'invention est de pouvoir passer d'un mode « empilage en pile » à un mode « empilage en épi » rapidement et à moindre coût permettant de traiter des formats de papier plus importants sur une même machine.

Dans ce but, l'invention a pour objet un dispositif d'empilage du genre indiqué en préambule, caractérisé en ce que ladite première extrémité et ladite seconde extrémité dudit convoyeur de décharge sont montées chacune sur au moins une structure de support comportant chacune ses propres courroies parallèles de longueur fixe et invariable, ladite structure de support de la première extrémité étant assemblée avec ladite structure de support de la seconde extrémité par une liaison coulissante parallèle au plan dudit convoyeur de décharge de manière à créer un convoyeur de décharge télescopique.

Selon une forme de réalisation préférentielle, ladite première extrémité est articulée autour d'un axe fixe horizontal, parallèle à ladite table d'empilement, tandis que ladite seconde extrémité est mobile en translation verticale entre lesdites positions basse et haute dudit convoyeur de décharge, ledit convoyeur de décharge étant agencé de manière telle que la distance comprise entre ledit axe fixe et ladite seconde extrémité mobile varie au fur et à mesure du déplacement vertical de ladite seconde extrémité grâce au déplacement relatif par coulissement desdites deux structures de support du convoyeur de décharge.

Par ailleurs, selon une caractéristique additionnelle, lesdits moyens d'entraînement comportent au moins un actionneur couplé par une transmission mécanique à un chariot mobile lié à ladite seconde extrémité dudit convoyeur de décharge.

Conformément à une variante de réalisation de l'invention, la transmission mécanique peut comporter au moins une vis sans fin verticale guidée en rotation dans un châssis fixe et engrenant ledit chariot mobile le long de ladite vis sans fin Selon une autre variante de réalisation, la transmission mécanique peut comporter au moins des poulies engrenant une courroie couplée audit chariot mobile guidé verticalement dans un châssis fixe.

D'autre part, le dispositif selon l'invention se caractérise également en ce que ledit chariot mobile est lié à une pièce de guidage comportant des moyens d'arrêt en translation permettant la formation de piles de feuilles homogènes, cette pièce de guidage pouvant comporter en outre un convoyeur pour amener la feuille coupée jusqu'à la butée, ainsi que des moyens de réglage de sa profondeur en fonction du format des feuilles empilées.

Avantageusement, le dispositif d'empilage selon l'invention comporte en outre des moyens de détection de la formation d'une pile complète, tels que des moyens de comptage du nombre de feuilles, ou des moyens de lecture de marques optiques imprimées sur lesdites feuilles.

Selon une autre caractéristique de l'invention, les structures de support dudit convoyeur de décharge comportent au moins une courroie surmontée d'une pluralité de galets alignés.

Par ailleurs, conformément à l'invention, ledit convoyeur de décharge présente avantageusement une longueur telle qu'il peut transporter simultanément plusieurs feuilles destinées à être acheminées les unes après les autres pour former une même pile ou plusieurs piles successives.

De même, selon une autre forme de réalisation avantageuse de l'invention, le convoyeur de décharge présente une largeur telle qu'il peut transporter simultanément plusieurs feuilles destinées à être acheminées simultanément les unes à côté des autres pour former simultanément plusieurs piles.

D'autre part, le dispositif d'empilage selon l'invention peut être avantageusement complété par un kit de transformation pour passer en mode « empilage en épi » comportant au moins une roue folle montée sur un axe porté par un bras articulé à l'extrémité libre de ladite pièce de guidage pour que ladite roue soit en contact souple avec le convoyeur de la table d'empilement et forme une butée mobile verticalement.

### Description sommaire des dessins :

La présente invention et ses avantages apparaîtront mieux dans la description suivante d'un mode de réalisation donné à titre d'exemple non limitatif, en référence aux dessins annexés, dans lesquels :
- les figures 1 à 3 représentent des vues schématiques de profil d'un dispositif d'empilage de feuilles selon l'art antérieur, respectivement au début d'un cycle d'empilage de feuilles, en cours de formation de la pile et lorsqu'une pile complète de feuilles est formée,
- la figure 4 est une vue en perspective d'un dispositif d'empilage selon l'invention,
- les figures 5 à 7 représentent des vues schématiques partielles de profil du dispositif d'empilage de la figure 4 respectivement au début d'un cycle d'empilage de feuilles, en cours de formation de la pile, et lorsqu'une pile complète de feuilles est formée,
- les figures 8 à 10 représentent respectivement des vues détaillées des parties D1, D2 et D3 des figures 5, 6 et 7,
- la figure 11 représente une vue de côté du dispositif d'empilage selon l'invention équipé d'un kit d'accumulation des feuilles en épi, et
- la figure 12 est une vue de dessus du dispositif d'empilage de la figure 11.

### Description de l'invention et meilleure manière de la réaliser :

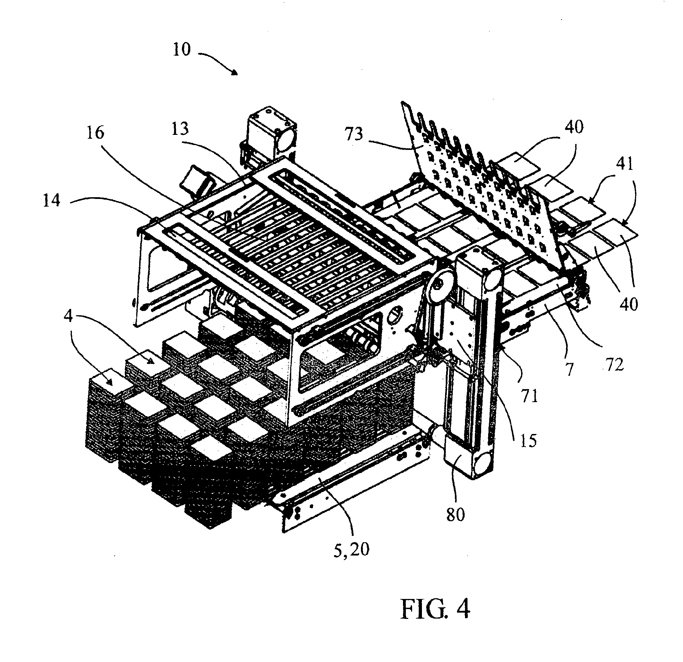

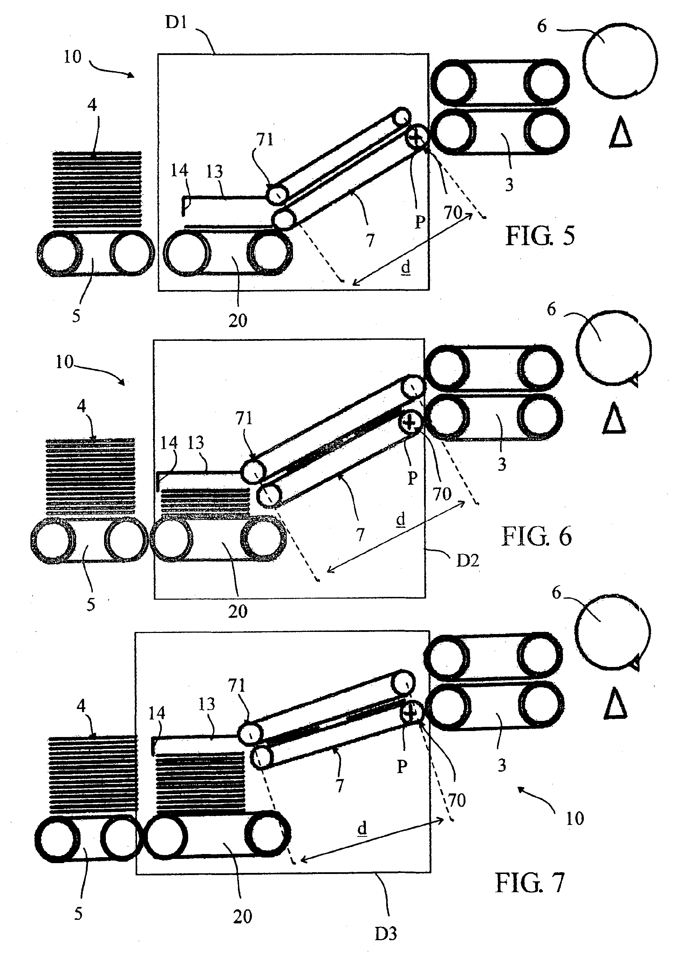

En référence aux figures 4 à 10, l'invention a pour objet un dispositif 10 d'empilage de feuilles en papier ou similaire, agencé pour former des piles de feuilles 4 en aval d'une ligne de découpe de feuilles comportant notamment un dérouleur, une imprimante (non représentés) et une découpeuse 6. Dans la variante de réalisation illustrée à la figure 4, un tel dispositif d'empilage 10 est avantageusement agencé pour former simultanément quatre piles de feuilles 4 à partir de quatre files 41 parallèles de feuilles individuelles 40, chaque pile 4 étant obtenue par superposition des feuilles 40 d'une même file 41. De manière classique, les feuilles 40 ont été préalablement découpées dans plusieurs bandes de papier ou similaire (non représentées), au moyen d'une découpeuse 6 (cf. fig. 5 à 7), et sont acheminées vers une table d'empilement 20 via un convoyeur de sortie de coupe 3 (cf. fig. 5 à 7) de largeur appropriée pour transporter les quatre files 41. Bien entendu, la figure 4 n'est qu'un exemple de réalisation et le dispositif d'empilage 10 peut permettre la formation de une à X piles de feuilles 4.

Conformément à l'invention, la table d'empilement 20 est fixe et située dans le même plan que le convoyeur d'évacuation des piles 5 (cf. fig. 5 à 7). Cette table d'empilement 20 peut également être confondue avec le convoyeur d'évacuation des piles 5 (cf. fig. 4). Par ailleurs, elle communique avec le convoyeur de sortie de coupe 3 au moyen d'un convoyeur de décharge 7, agencé pour transférer progressivement les feuilles 40 de papier ou similaire vers la table d'empilement 20 située en contrebas.

A cet effet, le convoyeur de décharge 7 comporte une ou plusieurs courroies 72 parallèles, surmontées d'une pluralité de galets de guidage 73 disposés en lignes parallèles (cf. fig. 4 et 8 à 10). Il présente une largeur appropriée à celle de la table d'empilement 20 pour transporter simultanément un nombre X de files de feuilles 41 parallèles correspondant au nombre X de piles de feuilles 4 à former. D'autre part, sa première extrémité 70, qui correspond à l'extrémité supérieure et communique avec le convoyeur de sortie de coupe 3, est articulée autour d'un axe fixe P horizontal et parallèle à la table d'empilement 20, tandis que sa seconde extrémité 71, qui correspond à l'extrémité inférieure et communique avec la table d'empilement 20 est mobile en translation verticale entre une position basse dans laquelle elle est située au niveau du plan de la table d'empilement 20 et une position haute dans laquelle elle est située à la hauteur d'une pile complète de feuilles 4.

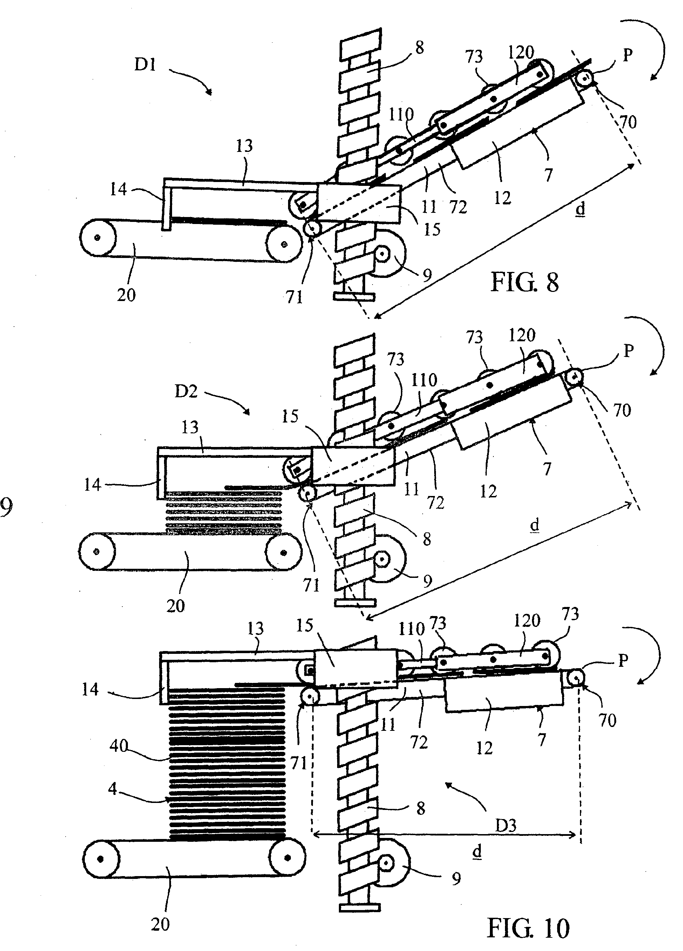

Dans l'exemple illustré, et tel que visible sur les figures 8 à 10, la seconde extrémité 71 se déplace verticalement, via un chariot mobile 15 à laquelle elle est reliée par exemple le long d'une vis sans fin verticale 8 commandée en rotation dans un châssis fixe 80 par un moteur 9. Bien entendu, d'autres moyens d'entraînement agencés pour commander le déplacement vertical de l'extrémité mobile 71, tels que notamment un ou plusieurs vérins, une transmission à poulies et courroie crantée, à pignons et chaîne, etc. peuvent également être envisagés. Dans ce type de transmission, la courroie crantée ou la chaîne est solidarisée au chariot mobile qui est guidé en translation verticale dans ledit châssis fixe 80.

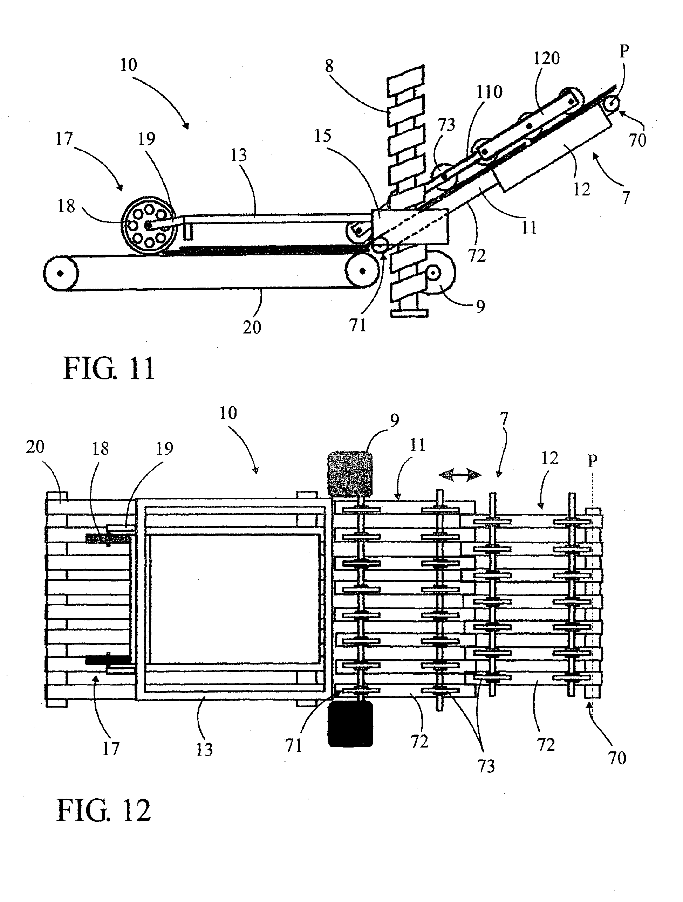

Par ailleurs, lesdites première et seconde extrémités 70, 71 du convoyeur de décharge 7 sont montées respectivement sur deux structures de support 11 et 12 distinctes, chaque structure de support 11, 12 comportant ses propres courroies 72 parallèles de longueur fixe et invariable. Tel qu'illustré aux figures 8 à 10 et 12, la structure de support 11 est assemblée à la structure de support 12par une liaison coulissante parallèle au plan dudit convoyeur de décharge 7 de manière à créer un convoyeur de décharge 7 télescopique. De ce fait, la distance d, comprise entre l'axe fixe P et la seconde extrémité 71, varie avantageusement au fur et à mesure du déplacement vertical de ladite seconde extrémité 71, cette variation étant automatique, sans avoir de répercutions sur la longueur les courroies 72 qui reste invariable. De ce fait, aucun mécanisme additionnel de mise en tension des courroies ne doit être prévu. Bien entendu, cette variation peut être assistée par tout moyen approprié et asservi par les moyens d'entraînement de l'extrémité mobile 71. Par ailleurs, il est possible de prévoir la même construction pour les galets de guidage 73. Ceux-ci sont également montés sur deux structures de support 110, 120 distinctes et assemblées par une liaison coulissante parallèle au plan dudit convoyeur de décharge 7 (figures 8 à 10).

Avec une telle configuration du dispositif d'empilage 10 selon l'invention, au début d'un cycle d'empilage, l'extrémité 71 mobile du convoyeur de décharge 7 est dans sa position basse, dans laquelle elle débouche sensiblement à hauteur du plan de la table d'empilement 20 (cf. fig. 5 et 8), de sorte que la feuille 41 formant la base d'une pile de feuilles 40 puisse y être déposée. Au fur et à mesure de l'acheminement des feuilles 41, l'extrémité 71 mobile est déplacée verticalement vers le haut provoquant le pivotement de l'ensemble du convoyeur de décharge 7 autour de l'axe P dans le sens horaire, de manière à suivre la progression de la pile de feuilles 40 en cours de formation (cf. fig. 6 et 9), jusqu'à atteindre la position haute qu'elle occupe lorsque la pile de feuilles 40 est complètement formée. Selon le cas, le convoyeur de décharge 7 est alors situé ou non dans un plan sensiblement horizontal, tel que représenté à la figure 10, correspondant sensiblement au point haut maximum du convoyeur de décharge 7.

L'achèvement de la formation d'une pile de feuilles 4, détecté par exemple par des moyens de comptage du nombre de feuilles 40 ou des moyens de lecture de marques optiques imprimées sur les feuilles 40 ou tout autre moyen similaire, provoque ensuite le transfert de la pile de feuilles 4 de la table d'empilement 20 vers le convoyeur d'évacuation 5. Du fait que la table d'empilement 20 est située dans le même plan que le convoyeur d'évacuation 5, ce transfert est effectué très rapidement, et le temps d'arrêt de la découpeuse 6 entre deux cycles d'empilage de feuilles 40 est par conséquent avantageusement limité au temps nécessité par le déplacement de l'extrémité mobile 71 du convoyeur de décharge 7 pour retourner à sa position basse provoquant le pivotement de l'ensemble du convoyeur de décharge 7 autour de l'axe P dans le sens antihoraire.

Dans la variante de réalisation illustrée, le convoyeur de décharge 7 est en outre suffisamment long pour pouvoir transporter simultanément les feuilles 40 de plusieurs piles 4 successives. Une telle configuration permet avantageusement à la découpeuse 6 de continuer à fonctionner alors que le convoyeur de décharge 7 retourne vers sa position basse en vue de recommencer un nouveau cycle d'empilage et par conséquent de gagner encore un temps significatif par rapport au dispositif d'empilage 1 de l'art antérieur.

Selon une autre caractéristique avantageuse de l'invention, le chariot mobile 15 est en outre lié à une pièce de guidage 13 comportant de préférence une butée 14 agencée pour positionner convenablement les feuilles 40 sur la table d'empilement 20 et permettre la formation de piles de feuilles 4 homogènes. Une telle butée 14 peut par exemple comporter un peigne (non représenté) dont les dents sont agencées, le cas échéant, pour passer entre les courroies du convoyeur d'évacuation 5 et/ou de la table d'empilement 20 lorsque l'extrémité mobile 71 est placée dans sa position basse. Dans ce cas, un mouvement de translation verticale du chariot mobile 15 permet d'amener le peigne vers une position plus haute dans laquelle il ne bloque plus le passage d'une pile de feuilles 4 et permet son évacuation. Selon une autre variante de réalisation de l'invention, le peigne peut être prévu escamotable pour répondre à ce même objectif. Par ailleurs, la pièce de guidage 13 est avantageusement complétée par un dispositif de convoyage 16, tel que représenté à la figure 4, sous la forme de courroies parallèles, pour accompagner les feuilles 40 jusqu'à la butée 14.

D'autre part, selon une caractéristique additionnelle de l'invention, la pièce de guidage 13 est avantageusement agencée pour s'adapter en profondeur au format des feuilles 40 empilées, et comporte à cet effet des moyens de réglage de sa taille (non représentés). Une telle configuration permet dans certains cas d'optimiser de manière notable le temps nécessaire à l'évacuation d'une pile de feuilles 4. En effet, lorsque le format des feuilles 40 est inférieur à la longueur du convoyeur d'empilement 20, plusieurs piles de feuilles 4 formées peuvent être stockées les unes derrière les autres sur ledit convoyeur d'empilement 20 avant d'être évacuées, par un seul et même mouvement de translation du convoyeur d'empilement 20, vers le convoyeur d'évacuation 5. Ceci est particulièrement avantageux par rapport aux dispositifs d'empilage de l'art antérieur dans lesquels l'évacuation des piles de feuilles 4 s'effectue pile par pile et nécessite par conséquent autant de mouvements de translation du convoyeur d'empilement 20 que de piles de feuilles 4 formées à partir d'une file 41.

Enfin, le dispositif d'empilage 10 selon l'invention peut être aisément et rapidement équipé d'un kit de transformation 17 pour passer en mode « empilage en épi » destiné à traiter des formats de feuilles 40 plus longs que la capacité d'empilement dudit dispositif. Cette modification est rendue possible sans modification profonde du dispositif grâce au fait que les feuilles 40 sont acheminées directement via le convoyeur de décharge 7 sur la table d'empilement 20 qui se trouve au même niveau que le convoyeur d'évacuation 5. Comme dit précédemment, la table d'empilement 20 et le convoyeur d'évacuation 5 peuvent ne former qu'un seul et même convoyeur. Ce kit de transformation 17 comporte dans l'exemple représenté deux roues 18 montées folles sur un même axe porté par un bras 19 articulé à l'extrémité libre de la pièce de guidage 13 pour que ces roues 18 soient en contact souple avec le convoyeur de la table d'empilement 20 et forment une butée mobile verticalement. Dans ce mode de fonctionnement, la seconde extrémité 71 du convoyeur de décharge 7 est placée en position basse au niveau de la table d'empilement 20 pour permettre l'accumulation des feuilles 40 en épi tout en assurant leur guidage grâce à la pièce de guidage 13 portée par le chariot mobile 15. La butée 14 est escamotée pour permettre aux feuilles 40, déposées l'une après l'autre par le convoyeur de décharge 7 sur la table d'empilement 20, d'avancer jusqu'aux roues 18 entraînées en rotation par le convoyeur de la table d'empilement 20. En parallèle, le convoyeur de la table d'empilement 20 et le convoyeur d'évacuation 5 avancent à une vitesse égale à une fraction constante de la vitesse de la découpeuse 6 et du convoyeur de décharge 7. Chaque feuille 40 qui arrive au contact des roues 18 est freinée par ces roues 18 qui exercent une légère pression sur le convoyeur puis passent sous les roues 18. La vitesse d'avance de chaque feuille 40 et le taux de recouvrement par la feuille 40 suivante sont déterminés par la vitesse d'avance du convoyeur de la table d'empilement 20. Les roues 18 peuvent être remplacées par un rouleau s'étendant sur toute la largeur de la feuille 40 ou par une pluralité de roues 18 parallèles.

### Possibilités d'application industrielle :

Il ressort clairement de cette description que l'invention permet d'atteindre les buts fixés, à savoir proposer un dispositif d'empilage 10 de feuilles 40 de papier ou similaire permettant de réduire au maximum les temps d'arrêt de la découpeuse 6 en vue de préserver la productivité d'ensemble de la ligne de découpe de feuilles 40.

En effet, grâce à l'invention, le temps d'arrêt de la découpeuse 6 lors de l'évacuation d'une pile de feuilles 4 complète, est réduit à une partie seulement du temps nécessaire au déplacement de l'extrémité mobile 71 du convoyeur de décharge 7 pour retourner dans sa position basse, cette course étant limitée à la hauteur des piles. Or, du fait de la simplicité de sa structure, le convoyeur de décharge 7 est particulièrement léger puisqu'il ne porte pas les piles de feuilles et se déplace très rapidement avec des moyens d'entraînement de faible puissance. Par ailleurs, conformément à l'invention, la table d'empilement 20 fixe est seule à supporter le poids des piles de feuilles 4 formées, ce qui permet l'économie de moyens d'actionnement du dispositif d'empilage 10 complexes, coûteux et de maintenance fastidieuse.

De plus, cette invention permet à moindre de coût de transformer le mode de fonctionnement pour passer d'un mode « empilage en pile » à un mode « empilage en épi » pour des formats de feuilles plus grands que la capacité de la tête d'empilement 20.

La présente invention n'est pas limitée à l'exemple de réalisation décrit mais s'étend à toute modification et variante évidentes pour un homme du métier tout en restant dans l'étendue de la protection définie dans les revendications annexées.

## Revendications

1. Dispositif d'empilage (10) de feuilles (40) de papier ou similaire, agencé pour former des piles (4) en aval d'une ligne de découpe de feuilles comportant notamment un dérouleur, une imprimante et une découpeuse (6), ledit dispositif d'empilage (10) comportant un convoyeur de sortie de coupe (3) agencé pour amener une à une les feuilles (40) coupées par la découpeuse (6) vers une table d'empilement (20) agencée pour communiquer avec un convoyeur d'évacuation (5) des piles (4) situé en contrebas du convoyeur de sortie de coupe (3), de sorte qu'une fois formée, au moins une pile (4) complète de feuilles (40) puisse être transférée de ladite table d'empilement (20) vers ledit convoyeur d'évacuation (5) des piles (4), ladite table d'empilement (20) étant fixe et située dans le même plan que ledit convoyeur d'évacuation (5) des piles (4) et ledit dispositif d'empilage (10) comportant un convoyeur de décharge (7) comportant une première extrémité (70) et une seconde extrémités (71) communiquant respectivement avec ledit convoyeur de sortie de coupe (3) et ladite table d'empilement (20), ledit convoyeur de décharge (7) étant agencé pour transférer une à une lesdites feuilles (40) coupées dudit convoyeur de sortie de coupe (3) vers ladite table d'empilement (20) et étant couplé à des moyens d'entraînement agencés pour déplacer ladite seconde extrémité (71) entre une position basse dans laquelle, lorsque la première feuille d'une pile (4) est acheminée, ladite seconde extrémité (71) se situe au niveau de la table d'empilement (20) et une position haute dans laquelle, lorsque la dernière feuille de la pile (4) est acheminée, ladite seconde extrémité (71) se situe à une hauteur correspondant à celle de la pile complète (4), **caractérisé en ce que** ladite première extrémité (70) et seconde extrémité (71) dudit convoyeur de décharge (7) sont montées chacune sur au moins une structure de support (11, 12) comportant chacune ses propres courroies (72) parallèles de longueur fixe et invariable, ladite structure de support (12) de la première extrémité (70) étant assemblée avec ladite structure de support (11) de la seconde extrémité (71) par une liaison coulissante parallèle au plan dudit convoyeur de décharge (7) de manière à créer un convoyeur de décharge (7) télescopique.

2. Dispositif d'empilage (10) selon la revendication 1, **caractérisé en ce que** ladite première extrémité (70) est articulée autour d'un axe (P) fixe horizontal, parallèle à ladite table d'empilement (20), tandis que ladite seconde extrémité (71) est mobile en translation verticale entre lesdites positions basse et haute dudit convoyeur de décharge (7), et **en ce que** ledit convoyeur de décharge (7) est agencé de manière telle que la distance (d) comprise entre ledit axe fixe (P) et ladite seconde extrémité mobile (71) varie au fur et à mesure du déplacement vertical de ladite seconde extrémité (71) grâce au déplacement relatif en coulissement des structures de support (11, 12) dudit convoyeur de décharge (7).

3. Dispositif d'empilage (10) selon la revendication 2, **caractérisé en ce que** lesdits moyens d'entraînement comportent au moins un actionneur couplé par une transmission mécanique à un chariot mobile (15) lié à la seconde extrémité (71) dudit convoyeur de décharge (7).

4. Dispositif d'empilage (10) selon la revendication 3, **caractérisé en ce que** ladite transmission mécanique comporte au moins une vis sans fin (8) verticale guidée en rotation dans un châssis fixe (80) et engrenant ledit chariot mobile (15) guidé le long de ladite vis sans fin (8).

5. Dispositif d'empilage (10) selon la revendication 3, **caractérisé en ce que** ladite transmission mécanique comporte au moins des poulies engrenant une courroie couplée audit chariot mobile (15) guidé verticalement dans un châssis fixe (80).

6. Dispositif d'empilage (10) selon la revendication 3, **caractérisé en ce que** ledit chariot mobile (15) est également lié à une pièce de guidage (13) comportant des moyens d'arrêt en translation (14) permettant la formation de piles de feuilles (4) homogènes.

7. Dispositif d'empilage (10) selon la revendication 6, **caractérisé en ce que** ladite pièce de guidage (13) comporte un convoyeur associé à une butée (14) agencée pour positionner convenablement les feuilles (40) de la pile (4) sur ladite table d'empilement (20).

8. Dispositif d'empilage (10) selon l'une quelconque des revendications 6 ou 7, **caractérisé en ce que** ladite pièce de guidage (13) comporte des moyens de réglage de sa profondeur en fonction du format des feuilles (40) empilées.

9. Dispositif d'empilage (10) selon l'une quelconque des revendications précédentes, **caractérisé en ce qu'**il comporte des moyens de détection de la formation d'une pile (4) complète.

10. Dispositif d'empilage (10) selon la revendication 9, **caractérisé en ce que** lesdits moyens de détection de la formation d'une pile (4) complète comportent des moyens de comptage du nombre de feuilles.

11. Dispositif d'empilage (10) selon la revendication 9, **caractérisé en ce que** lesdits moyens de détection de la formation d'une pile (4) complète comportent des moyens de lecture de marques optiques imprimées sur lesdites feuilles (40).

12. Dispositif d'empilage (10) selon l'une quelconque des revendications précédentes, **caractérisé en ce que** chaque structure portante (11, 12) dudit convoyeur de décharge (7) comporte au moins une courroie (72) surmontée d'une pluralité de galets (73) alignés.

13. Dispositif d'empilage (10) selon l'une quelconque des revendications précédentes, **caractérisé en ce que** ledit convoyeur de décharge (7) présente une longueur telle qu'il peut transporter simultanément plusieurs feuilles (40) destinées à être acheminées les unes après les autres pour former une même pile (4) ou plusieurs piles (4) successives.

14. Dispositif d'empilage (10) selon l'une quelconque des revendications précédentes, **caractérisé en ce que** ledit convoyeur de décharge (7) présente une largeur telle qu'il peut transporter simultanément plusieurs feuilles (40) destinées à être acheminées simultanément les unes à côté des autres pour former simultanément plusieurs piles (4).

15. Dispositif d'empilage (10) selon l'une quelconque des revendications précédentes, **caractérisé en ce qu'**il comporte un kit de transformation (17) pour passer en mode « empilage en épi » comportant au moins une roue (18) folle montée sur un axe porté par un bras (19) articulé à l'extrémité libre de ladite pièce de guidage (13) pour que ladite roue (18) soit en contact souple avec le convoyeur de la table d'empilement (20) et forme une butée mobile verticalement.

## Patentansprüche

1. Vorrichtung (10) zum Stapeln von Papierbögen (40) oder dergleichen, ausgelegt, um am Ausgang einer Schneidanlage für Bögen Stapel (4) zu bilden, insbesondere bestehend aus einem Abwickler, einem Drucker und einer Schneidmaschine (6), wobei besagte Vorrichtung (10) zum Stapeln einen Schneidmaschinen-Ausgangsförderer (3) beträgt, der ausgelegt ist, um einen nach dem anderen die von Schneidmaschine (6) geschnittenen Bögen (40) auf einen Stapeltisch (20) zu bringen, der ausgelegt ist, um mit einem unterhalb des Schneidmaschinen-Ausgangsförderers (3) befindlichen Abförderer (5) für die Stapel (4) in Verbindung zu stehen, so dass, wenn er gebildet ist, zumindest ein vollständiger Stapel (4) von Bögen (40) von besagtem Stapeltisch (20) auf besagten Abförderer (5) der Stapel (4) überführt werden kann, wobei besagter Stapeltisch (20) fest ist und sich in der selben Ebene als besagter Abförderer (5) der Stapel (4) befindet und besagte Vorrichtung (10) zum Stapeln einen Entladeförderer (7) mit einem ersten Ende (70) und einem zweiten Ende (71) beträgt, die mit besagtem Schneidmaschinen-Ausgangsförderer (3) beziehungsweise mit besagtem Stapeltisch (20) in Verbindung stehen, wobei besagter Entladeförderer (7) ausgelegt ist, um einen nach dem anderen besagte geschnittene Bögen (40) von besagtem Schneidmaschinen-Ausgangsförderer (3) zu besagtem Stapeltisch (20) zu fördern und an Antriebsmittel gekoppelt ist, die ausgelegt sind, um besagtes zweites Ende (71) zwischen einer niedrigen Position in der, wenn der erste Bogen eines Stapels (4) überführt wird, besagtes zweites Ende (71) sich auf der Höhe des Stapeltisches (20) befindet, und einer hohen Position in der, wenn der letzte Bogen des Stapels (4) überführt wird, besagtes zweites Ende (71) sich auf einer Höhe befindet, die der des vollständigen Stapels (4) entspricht, **dadurch gekennzeichnet, dass** besagtes erstes Ende (70) und besagtes zweites Ende (71) von besagtem Entladeförderer (7) jeweils auf zumindest eine Tragstruktur (11, 12) montiert sind, die jede ihre eigenen parallelen Riemen (72) mit einer festen und unveränderlichen Länge betragen, wobei besagte Tragstruktur (12) von erstem Ende (70) über eine zu besagtem Entladeförderer (7) parallele Gleitverbindung mit besagter Tragstruktur (11) von zweitem Ende (71) verbunden ist, um einen teleskopischen Entladeförderer (7) zu bilden.

2. Vorrichtung (10) zum Stapeln nach Anspruch 1, **dadurch gekennzeichnet, dass** besagtes erstes Ende (70) um eine feste, horizontale, zu besagtem Stapeltisch (20) parallele Achse (P) angelenkt ist, während besagtes zweites Ende (71) vertikal zwischen besagten niedrigen und hohen Positionen von besagtem Entladeförderer (7) beweglich ist, und dadurch, dass besagter Entladeförderer (7) so ausgelegt ist, dass der Abstand (d) zwischen besagter festen Achse (P) und besagtem zweiten beweglichen Ende (71) dank der relativen Gleitbewegung der Tragstrukturen (11, 12) von besagtem Entladeförderer (7) je nach der vertikalen Bewegung von besagtem zweiten Ende (71) variiert.

3. Vorrichtung (10) zum Stapeln nach Anspruch 2, **dadurch gekennzeichnet, dass** besagte Antriebsmittel zumindest einen Antrieb betragen, der über eine mechanische Übertragung an einen mit zweitem Ende (71) von Entladeförderer (7) verbundenen beweglichen Schlitten (15) gekoppelt ist.

4. Vorrichtung (10) zum Stapeln nach Anspruch 3, **dadurch gekennzeichnet, dass** besagte mechanische Übertragung zumindest eine vertikale Schnecke (8) beträgt, die drehbar in einem festen Gestell (80) geführt ist und in besagten, entlang besagter Schnecke (8) geführten beweglichen Schlitten (15) eingreift.

5. Vorrichtung (10) zum Stapeln nach Anspruch 3, **dadurch gekennzeichnet, dass** besagte mechanische Übertragung zumindest Riemenscheiben beträgt, in die ein Riemen eingreift, der an besagten vertikal in einem festen Gestell (80) geführten beweglichen Schlitten (15) gekoppelt ist.

6. Vorrichtung (10) zum Stapeln nach Anspruch 3, **dadurch gekennzeichnet, dass** besagter beweglicher Schlitten (15) ebenfalls mit einem Führungselement (13) verbunden ist, das Anschlagmittel (14) für die Translationsbewegung beträgt, die die Bildung von homogenen Bogenstapeln (4) ermöglichen.

7. Vorrichtung (10) zum Stapeln nach Anspruch 6, **dadurch gekennzeichnet, dass** besagtes Führungselement (13) einen mit einem Anschlag (14) verbundenen Förderer beträgt, der ausgelegt ist, um die Bögen (40) von Stapel (4) ordnungsgemäß auf besagtem Stapeltisch (20) zu stapeln.

8. Vorrichtung (10) zum Stapeln nach einem beliebigen der Ansprüche 6 oder 7, **dadurch gekennzeichnet, dass** besagtes Führungselement (13) Mittel zur Einstellung seiner Tiefe in Abhängigkeit des Formats der gestapelten Bögen (40) beträgt.

9. Vorrichtung (10) zum Stapeln nach einem beliebigen der vorhergehenden Ansprüche, **dadurch gekennzeichnet, dass** sie Mittel zur Erfassung der Bildung eines vollständigen Stapels (4) beträgt.

10. Vorrichtung (10) zum Stapeln nach Anspruch 9, **dadurch gekennzeichnet, dass** besagte Mittel zur Erfassung der Bildung eines vollständigen Stapels (4) Mittel zum Zählen der Anzahl Bögen beträgt.

11. Vorrichtung (10) zum Stapeln nach Anspruch 9, **dadurch gekennzeichnet, dass** besagte Mittel zur Erfassung der Bildung eines vollständigen Stapels (4) Mittel zum Lesen von auf besagten Bögen (40) gedruckten optischen Zeichen beträgt.

12. Vorrichtung (10) zum Stapeln nach einem beliebigen der vorhergehenden Ansprüche, **dadurch gekennzeichnet, dass** jede Tragstruktur (11, 12) von besagtem Entladeförderer (7) zumindest einen Riemen (72) beträgt, auf dem eine Vielzahl ausgerichtete Rollen (73) aufliegt.

13. Vorrichtung (10) zum Stapeln nach einem beliebigen der vorhergehenden Ansprüche, **dadurch gekennzeichnet, dass** besagter Entladeförderer (7) eine Länge aufweist, die ihm erlaubt, gleichzeitig mehrere Bögen (40) zu transportieren, die einer nach dem anderen überführt werden müssen, um einen gleichen Stapel (4) oder mehrere aufeinanderfolgende Stapel (4) zu bilden.

14. Vorrichtung (10) zum Stapeln nach einem beliebigen der vorhergehenden Ansprüche, **dadurch gekennzeichnet, dass** besagter Entladeförderer (7) eine Breite aufweist, die ihm erlaubt, gleichzeitig mehrere Bögen (40) zu transportieren, die gleichzeitig nebeneinander überführt werden müssen, um gleichzeitig mehrere Stapel (4) zu bilden.

15. Vorrichtung (10) zum Stapeln nach einem beliebigen der vorhergehenden Ansprüche, **dadurch gekennzeichnet, dass** sie einen Umbausatz (17) zum übergehen zu einem "Fischgrat-Stapel"-Modus beträgt, bestehend aus einem Leitrad (18) auf einer Achse, die von einem am freien Ende von besagtem Führungsteil (13) angelenkten Arm (19) getragen wird, damit besagtes Rad (18) mit dem Förderer von Stapeltisch (20) in elastischem Kontakt steht und einen vertikal beweglichen Anschlag bildet.

## Claims

1. Device (10) for stacking sheets (40) of paper or similar, arranged to form stacks (4) downstream of a sheet cutting line including in particular an unroller, a printer and a cutter (6), said stacking device (10) including a cutter outfeed conveyor (3) arranged to bring the sheets (40) cut by the cutter (6) one by one towards a stacking table (20) arranged to communicate with a stacks (4) evacuation conveyor (5) located below the cutter outfeed conveyor (3) so that, once it is formed, at least one complete stack (4) of sheets (40) can be transferred from said stacking table (20) to said stack (4) evacuation conveyor (5), said stacking table (20) being fixed and located in the same plane as said stack (4) evacuation conveyor (5) and said stacking device (10) including an unloading conveyor (7) comprising a first end (70) and a second end (71) that communicate respectively with said cutting outfeed conveyor (3) and said stacking table (20), said unloading conveyor (7) being arranged to transfer said cut sheets (40) one by one from said cutter outfeed conveyor (3) towards said stacking table (20) and being coupled with driving means arranged to move said second end (71) between a low position in which, when the first sheet of a stack (4) is conveyed, said second end (71) is located at the level of the stacking table (20) and a high position in which, when the last sheet of the stack (4) is conveyed, said second end (71) is located at a height corresponding to that of the complete stack (4), **characterized in that** said first end (70) and said second end (71) of said unloading conveyor (7) are mounted each on at least one supporting structure (11, 12) each comprising its own parallel belts (72) with fixed and invariable lengths, said supporting structure (12) of the first end (70) being assembled with said second supporting structure (11) of the second end (71) by a sliding connection parallel to the plane of said unloading conveyor (7) in order to create a telescopic unloading conveyor (7).

2. Stacking device (10) according to claim 1, **characterized in that** said first end (70) is articulated about a fixed horizontal axis (P), parallel to said stacking table (20), while said second end (71) is movable in vertical translation between said low and high positions of said unloading conveyor (7), and **in that** said unloading conveyor (7) is arranged so that the distance (d) comprising between said fixed axis (P) and said second movable end (71) varies progressively as said second end (71) moves vertically, thanks to the relative sliding displacement of the supporting structures (11, 12) of said unloading conveyor (7).

3. Stacking device (10) according to claim 2, **characterized in that** said driving means include at least one actuator coupled by means of a mechanical transmission with a mobile carriage (15) connected to said second end (71) of said unloading conveyor (7).

4. Stacking device (10) according to claim 3, **characterized in that** said mechanical transmission includes at least one vertical endless screw (8) guided in rotation in a fixed frame (80) and engaging said mobile carriage (15) guided along said endless screw (8).

5. Stacking device (10) according to claim 3, **characterized in that** said mechanical transmission includes at least pulleys engaging a belt coupled with said mobile carriage (15), which is guided vertically in a fixed frame (80).

6. Stacking device (10) according to claim 3, **characterized in that** said mobile carriage (15) is also coupled with a guiding element (13) comprising translation stopper means (14) that allow forming homogeneous sheet stacks (4).

7. Stacking device (10) according to claim 6, **characterized in that** said guiding element (13) includes a conveyor associated with a stop (14) arranged to position properly the sheets (40) of the stack (4) on said stacking table (20).

8. Stacking device (10) according to any of claims 6 or 7, **characterized in that** said guiding element (13) comprises means for adjusting its depth in function of the format of the stacked sheets (40).

9. Stacking device (10) according to any of the previous claims, **characterized in that** it comprises means for detecting the formation of a complete stack (4).

10. Stacking device (10) according to claim 9, **characterized in that** said means for detecting the formation of a complete stack (4) include means for counting the number of sheets.

11. Stacking device (10) according to claim 9, **characterized in that** said means for detecting the formation of a complete stack (4) include means for reading optical marks printed on said sheets.

12. Stacking device (10) according to any of the previous claims, **characterized in that** each supporting structure (11, 12) of said unloading conveyor (7) comprises at least one belt (72) topped by a plurality of aligned guide rollers (73).

13. Stacking device (10) according to any of the previous claims, **characterized in that** said unloading conveyor (7) has a length such that it can transport simultaneously several sheets (40) intended to be conveyed one after the other to form a same stack (4) or several successive stacks (4).

14. Stacking device (10) according to any of the previous claims, **characterized in that** said unloading conveyor (7) has a width such that it can transport simultaneously several sheets (40) intended to be conveyed simultaneously beside each other to form simultaneously several stacks (4).

15. Stacking device (10) according to any of the previous claims, **characterized in that** it comprises a transformation kit (17) to switch over to the "stepped stacking" mode including at least one idle wheel (18) mounted on an axis carried by an arm (19) articulated about the free end of said guiding element (13) so that said wheel (18) is in elastic contact with the conveyor of the stacking table (20) and forms a vertically movable stop.
